# EUROPEAN PATENT APPLICATION

(11) **EP 1 559 626 A1**
(43) Date of publication of application: **03.08.2005**
(21) Application number: 04030300.0
(22) Date of filing: 21.12.2004
(51) Int. Cl.: B62B 9/00, B62B 9/12

(54) **Baby carriage and baby carriage component**

(30) Priority: 06.01.2004 JP 2004001227; 29.03.2004 JP 2004095888
(71) Applicant: Aprica Kassai Kabushikikaisha, Osaka-shi, Osaka 542-0082 (JP)
(72) Inventor: Kassai, Kenzou, Osaka-shi Osaka 542-0083 (JP); Ohnishi, Ichiro Aprica Kassai Kabushikikaisha, Osaka-shi Osaka 542-0082 (JP)
(74) Representative: Hofer, Dorothea, Dipl.-Phys.

(57) **Abstract**

A goods-storage basket (20) which is mounted under a seat of a baby carriage comprises a front wall (21), a bottom wall (22), a rear wall (23) and right and left side walls. Each of an outer surface of the front wall (21), an outer surface of the bottom wall (22) and an outer surface of the rear wall (23) has a heat reflection surface (24).

## Description

### BACKGROUND OF THE INVENTION

### 1. Field of the Invention

The present invention relates to a baby carriage and a baby carriage component which can prevent heat radiation from a road surface from affecting a baby.

### 2. Description of the Background Art

According to research by an applicant of the present application, when a baby carriage in the form of bed was used on an asphalt road surface around 2 p.m. on a sunny day in summer, a temperature at a face position of a baby became 36.4°C which is higher than a temperature published by meteorological observatory by as much as 5.5°C because of heat radiation from the road surface. This temperature was higher than a temperature at a face position of a head of a person who pushed the baby carriage by as much as 3.5°C. When the baby carriage was stopped, the temperature at the face position of the baby further rose and it became higher than the temperature at the face position of the person who used the baby carriage by as much as 4°C or more.

In order to provide comfortable circumstances for a baby in a seat, it is necessary to reduce an influence of the heat radiation from the road surface as much as possible.

Publication No. 3062917 of Japanese Utility Model Registration discloses a baby carriage tool which can protect a baby from heat such as heat radiation from a road surface. More specifically, the tool has almost the same outline configuration as that of a seat part and the like of the baby carriage, and comprises a hermetic pouched container and a cooling material filled in the pouched container. The tool is placed between a seat forming member of the baby carnage and a body of the baby to prevent the body of the baby from being heated up.

According to the tool disclosed in Publication No. 3062917 of Japanese Utility Model Registration, the cooling material cools down the air around the baby. Therefore, if the tool is used on a day when an outside temperature is not so high, the baby body could be cooled down too much. In order to avoid such situation, it is necessary to mount or dismount the tool depending on the outer temperature or the weather. However, such mounting and dismounting operations are troublesome.

In addition, even when the tool is mounted on a day when the outer temperature is high, when the baby carriage enters a shaded area or indoors, the baby body is cooled down by the cooling material too much. Therefore, it is necessary to remove the tool in the shaded area or indoors.

As elements which provide comfortable circumstances for the baby, ventilation is considered. Thus, a well-ventilated seat is preferable in summer or on a hot and humid day in order to provide a cool feeling for the baby in the seat of the baby carriage. Meanwhile, it is preferable to keep out drafts to keep warmness in winter or on a cold and windy day.

The same applicant of the present application discloses a baby carriage in which a degree of ventilation of a backrest part can be adjusted in Japanese Unexamined Patent Publication No. 2003-175827. More specifically, a wall constituting the backrest part comprises a first and a second plate members arranged so as to overlap each other, in which the first plate member has first openings which penetrate in the thickness direction, and the second plate member has second openings which penetrate in the thickness direction, and they are provided so as to be relatively changed in position between a first position in which the first and second openings are aligned and a second position in which the first and second openings are shifted.

According to the baby carriage having the above described constitution, when the second plate member is held at the first position, since wind passes through the first and the second openings in the seat, preferable ventilation can be provided. Meanwhile, when the second plate member is held at the second position, since the first and second opening are closed, wind does not enter the seat through the openings, preferable warmness is provided.

Japanese Unexamined Patent Publication No. 2003-175827 discloses a baby carriage in which a backrest part can be reclined to almost a horizontal state. In the case of such baby carriage which can take the form of bed, it is necessary to consider heat circumstances by heat reflected from an asphalt or concrete road surface in summer especially. Thus, in the case of the baby carriage which takes the form of bed especially, it is preferable to take measures against radiant heat from the road surface.

### SUMMARY OF THE INVENTION

It is an object of the present invention to provide a baby carriage and a baby carriage component which can reduce an influence of heat radiation from a road surface without any troublesome procedure.

It is another object of the present invention to provide a baby carriage which can adjust ventilation of a seat forming member and prevent radiation heat from a road surface.

A baby carriage component according to the present invention is mounted on a baby carriage to be used and has a heat reflection surface which faces a road surface. Since the heat reflection surface can reflect radiant heat from the road surface, the baby carriage component is prevented from being heated up excessively.

One example of the baby carriage component is a goods-storage basket mounted under a seat of the baby carriage, in which at least an outer surface of a bottom wall of the goods-storage basket has the heat reflection surface.

Since the bottom wall of the goods-storage basket closely faces a road surface, it is most affected by radiant heat from the road surface. If the goods-storage basket is heated up by the radiant heat from the road surface too much, the seat of the baby carriage is heated up by the heat generated from the goods-storage basket. When the outer surface of the bottom wall of the goods-storage basket has the heat reflection surface, since the radiant heat from the road surface is reflected, the seat can be prevented from being heated up excessively.

When the goods-storage basket comprises a bottom wall, a front wall, a rear wall and right and left side walls, it is preferable that each of an outer surface of the front wall, an outer surface of the bottom wall and an outer surface of the rear wall has the heat reflection surface.

Another example of the baby carriage component is a seat hammock mounted on a body of the baby carriage to form a seat, in which a back surface of the seat hammock has the heat reflection surface. According to this constitution, since the heat reflection surface on the back surface of the seat hammock reflects radiant heat, the seat can be prevented from being heated up excessively.

Still another example of the baby carriage is a core of a seat hammock mounted on a body of the baby carriage, in which a back surface of the core has the heat reflection surface. According to this constitution, since the heat reflection surface on the back surface of the core reflects radiant heat from a road surface, the seat can be prevented from being heated up excessively.

A baby carriage according to the present invention has a heat reflection sheet on the back side of a seat. According to this constitution, since the heat reflection sheet on the back side of the seat reflects radiant heat from a road surface, the seat can be prevented from being heated up excessively. According to one embodiment, the heat reflection sheet is provided on the back side of a body frame which forms the seat.

A baby carriage according to another embodiment of the present invention comprises a seat forming member having ventilation openings, a reflection member and holding means. The reflection member is provided so as to be selectively changed in position between a first position in which it is positioned closely to a back surface of the seat forming member, and a second position in which it is positioned apart from the back surface of the seat forming member, and an outer surface which does not face the seat forming member forms a reflective surface. The holding means holds the reflection member so as to be changeable in position. The ventilation openings are closed when the reflection member is in the first position, and the ventilation openings are opened when the reflection member is in the second position.

According to the constitution of the present invention, since the heat reflection surface of the reflection member reflects radiant heat from a road surface, a temperature in the seat can be prevented from being increased abnormally. In addition, since the ventilation openings are closed by moving the reflection member closely to the seat forming member, and the ventilation openings are opened by moving the reflection member away from the seat forming member, it is not necessary to provide ventilation openings in the reflection member, so that the reflective surface can be easily formed.

According to one embodiment, the seat forming member is a backrest part which can be adjustably reclined. In this case, even when the seat is in the form of bed, a temperature at a face position of a baby can be prevented from being increased abnormally. The backrest part may comprise a pair of side walls rising from its both side edges and extending to the front. Each side wall preferably has ventilation openings. The reflection member comprises a pair of side wall reflection members provided so as to be selectively changed in position between a position in which it comes close to a back surface of the pair of side walls and a position in which it moves away from the back surface of the pair of side walls.

According to another embodiment, the forming member is a seat part.

### BRIEF DESCRIPTION OF THE DRAWINGS

Fig. 1 is a side view showing a body frame of a baby carriage schematically;
Fig. 2 is a side view showing a baby carriage comprising a seat hammock schematically;
Fig. 3 is a side view showing a baby carriage comprising a goods-storage basket schematically;
Fig. 4 is a schematic side view showing one embodiment of the present invention;
Fig. 5 is a schematic side view showing a state in which a backrest part is reclined from a state shown in Fig. 4 and ventilation openings are opened;
Fig. 6 is a schematic plan view showing another embodiment of the present invention;
Fig. 7 is a schematic plan view showing a state the ventilation openings are opened from the state shown in Fig. 6;
Fig. 8 is a schematic plan view showing still another embodiment of the present invention; and
Fig. 9 is a schematic plan view showing a state ventilation openings are opened from the state shown in Fig. 8.

### DESCRIPTION OF THE PREFERRED EMBODIMENTS

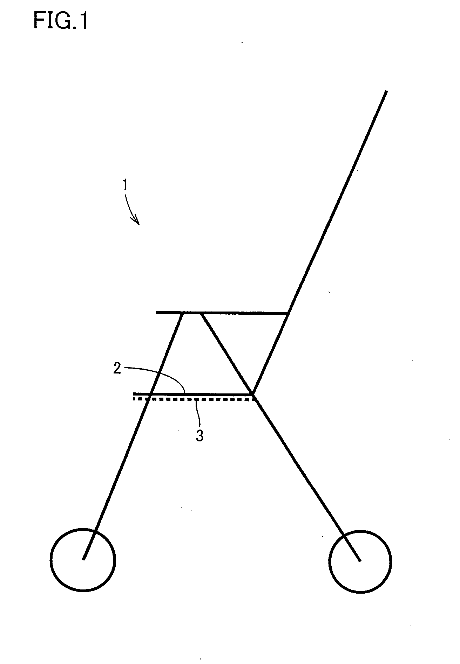

A baby carriage 1 shown in Fig. 1 has a reflection surface under a seat. More specifically, the baby carriage comprises a heat reflection sheet 3 on the back side of a seat frame 2 which forms a seat in a body frame. Since the heat reflection sheet 3 faces a road surface and reflects radiant heat from the road surface, the seat is prevented from being heated up excessively. The heat reflection sheet 3 may be formed of any material as long as the material can reflect the radiant heat from the road surface.

In a case of a baby carriage in which a backrest part is reclined to almost a horizontal state to take the form of bed, the backrest part faces the road surface in the form of bed. In this case, since the backrest part could be heated up by the radiant heat from the road surface, a heat reflection surface is preferably provided on the back side of a backrest frame which forms the backrest part.

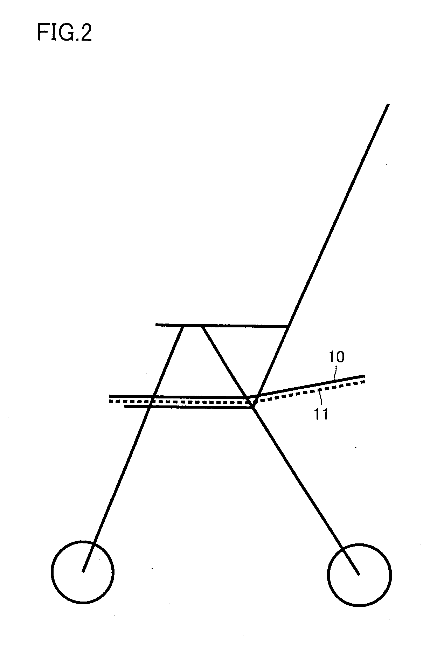

According to an embodiment shown in Fig. 2, a seat hammock 10 which is mounted on a body of a baby carriage to form a seat has a heat reflection surface 11 on its back surface. The seat hammock 10 comprises a seat part and a backrest part, and the heat reflection surface 11 is preferably formed on the back surfaces of the seat part and the backrest part. In a case where a reclining angle of the backrest part is not increased so much and the form of bed is not taken, the heat reflection surface may be formed only on the back surface of the seat part of the seat hammock 10.

The heat reflection surface 11 may be formed by attaching a heat reflection sheet to the back surface of the seat hammock 10 or using a heat reflecting material in fibers of a cloth which forms the back surface of the seat hammock 10.

When the seat hammock is provided with a core, the heat reflection surface may be formed on the back surface of the core. When the core comprises a seat core and a backrest core, the heat reflection surface is preferably formed on the back surfaces of the seat core and the backrest core.

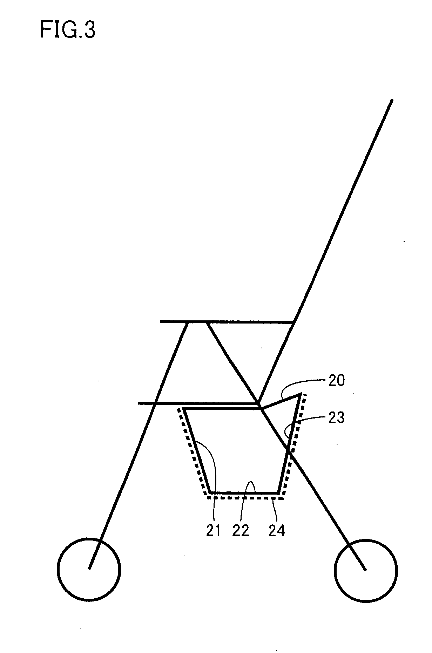

According to an embodiment shown in Fig. 3, a goods-storage basket 20 mounted under a seat of a baby carriage has a heat reflection surface 24. More specifically, the goods-storage basket 20 comprises a front wall 21, a bottom wall 22, a rear wall 23 and right and left side walls. Each of an outer surface of the front wall 21, an outer surface of the bottom wall 22 and an outer surface of the rear wall 23 has the heat reflection surface 24.

Since the bottom wall 22 of the goods-storage basket 20 faces the road surface most closely, it is most affected by radiant heat from the road surface and likely to be heated up. When the goods-storage basket 20 is excessively heated up by the heat of the bottom wall 22, the seat of the baby carriage is heated up by the heat from the goods-storage basket 20. However, since the heat reflection surface 24 of the bottom wall 22 reflects the radiant heat from the road surface, the seat is prevented from being heated up.

In order to enhance a heat reflecting effect of the goods-storage basket 20, the heat reflection surface 24 is preferably formed on the outer surface of the front wall and the outer surface of the rear wall 23 in addition to the outer surface of the bottom wall 22 as shown in Fig. 3. In addition, the heat reflection surface may be formed on outer surfaces of the right and left side walls of the goods-storage basket 20.

The goods-storage basket 24 may be formed by attaching heat reflection sheets to the outer surfaces of the front wall 21, the bottom wall 22 and the rear wall 23 of the goods-storage basket 20, or using a heat reflecting material in fibers of a cloth which forms the front wall 21, the bottom wall 22 and the rear wall 23 of the goods-storage basket 20.

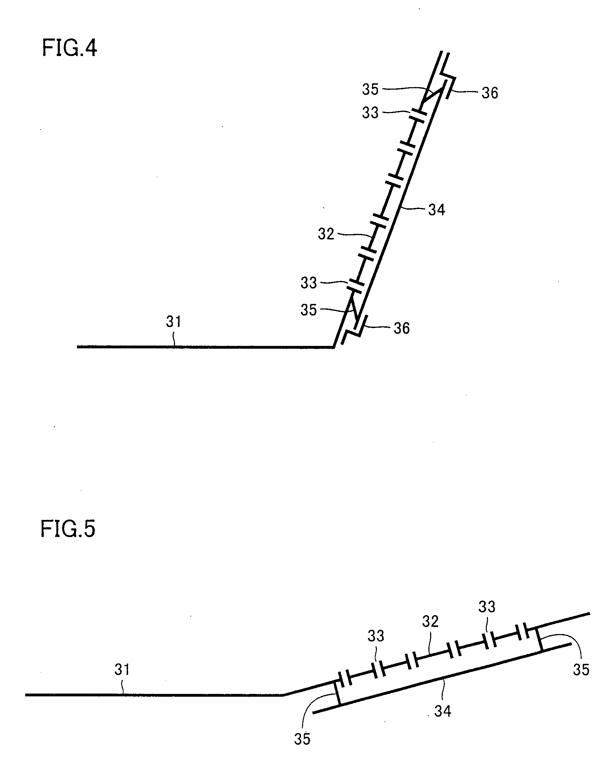

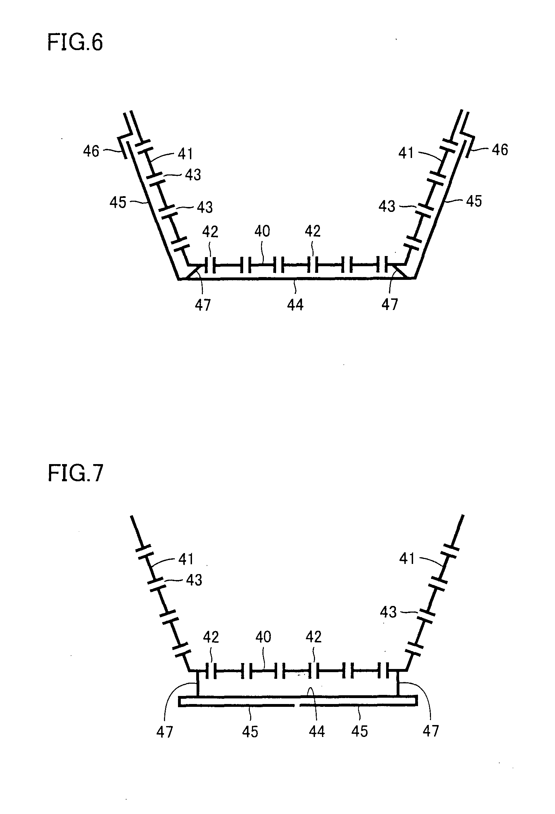

Figs. 4 and 5 schematically show a seat of a baby carriage according to another embodiment of the present invention. The seat of the baby carriage comprises a seat part 31 and a backrest part 32. The backrest part 32 is so constituted that it can be reclined to take the form of bed as shown in Fig. 5. The backrest part 32 has many ventilation openings to provide comfortable ventilation for the seat. The ventilation opening 33 is in the form of through hole, for example.

The seat of the baby carriage further comprises a reflection member 34, holding means 35 and a stopper 36. The reflection member 34 can be selectively changed in position between a first position in which it is positioned closely to the back surface of the backrest part 32 as shown in Fig. 4, and a position in which it is positioned apart from the back surface of the backrest part 32 as shown in Fig. 5.

According to the reflection member 34, its outer surface which does not face the backrest 32 forms a reflective surface. The reflective surface may be provided by forming the reflection member itself with an aluminum plate, for example. As another example, reflective metal such as aluminum may be evaporated or aluminum foil may be bonded on a surface of a plate which forms the reflection member 34.

The holding means 35 holds the reflection member 34 such that the reflection member 34 can be changed in position and connects the backrest part 32 and the reflection member 34 such that they can come close to or move away from each other. As such holding means 35, a link member whose both ends are rotatably connected, a flexible belt member and the like can be used.

The stopper 36 holds the reflection member 34 so as to be in close contact with the back surface of the backrest part 32. As such stopper 36, a clip which is mounted on the backrest part 32 and can be changed in position, a connecting tool which detachably connects the backrest part 32 and the reflection member 34 and the like can be used.

When the reflection member 34 is in the first position shown in Fig. 4, that is, when the reflection member 34 is in close contact with the back surface of the backrest part 32, the ventilation openings 33 of the backrest part 32 are closed by the reflection member 34. Meanwhile, when the reflection member 34 is in the second position shown in Fig. 5, that is, when the reflection member 34 is largely apart from the back surface of the backrest part 32, the ventilation openings 33 of the backrest part 32 are opened.

As described above, according to the embodiments shown in Figs. 4 and 5, the reflection member 34 is brought in the first position shown in Fig. 4 to provide comfortable warmness for the seat in winter or on a cold and windy day. Meanwhile, the reflection member 34 is brought in the second position shown in Fig. 5 to open the ventilation openings 33 to provide comfortable ventilation for the seat in summer or on a hot and humid day. In addition, the reflection member 34 may be brought to the second position to open the ventilation opening 33 in the form of chair shown in Fig. 4. On the contrary, the reflection member 34 may be brought to the first position to close the ventilation openings 33 in the form of bed as shown in Fig. 5.

Although the radiant heat from the road surface becomes a problem on a sunny day in summer, according to the embodiments shown in Figs. 4 and 5, since the reflective surface of the reflection member 34 reflects the radiant heat from the road surface, a position at a baby face is prevented from being heated up abnormally even when the seat takes the form of bed.

As described above, according to the embodiments shown in Figs. 4 and 5, the reflection member 34 has both function of adjusting ventilation and function of preventing the radiant heat from the road surface.

In the case of a baby carriage in which a backrest part cannot be reclined or the form of bed is not taken, the reflective surface for reflecting the radiant heat from the road surface may be provided on the back surface of the seat part 31. However, since a basket or the like which stores goods is provided under the seat part 31 in general, the reflective surface does not need to be provided especially in some cases. The reflective surface may be provided on the back surfaces of the backrest part and the seat part.

Figs. 6 and 7 schematically show still another embodiment of the present invention. An illustrated seat comprises a backrest part 40 having ventilation openings 42, and a reflection member 44 provided so as to come close or move away from the backrest part 40 through holding means 47.

The backrest part 40 comprises a pair of side walls 41 rising from its both side edges and extending to the front. Each side wall 41 has many ventilation openings 43. As shown in Fig. 6, the reflection member 44 comprises a pair of side wall reflection members 45 extending from its both side edges along the pair of side walls 41 of the backrest part. A stopper 46 holds the pair of side wall reflection members 45 so as to be in close contact with the pair of side walls 41 of the backrest part 40.

As shown in Fig. 7, the pair of side wall reflection members 45 can be folded so as to overlap on the back surface of the reflection member 44. A folded state of the pair of side reflection members 45 can be maintained by appropriate means although it is not shown.

When the reflection member 44 comprising the pair of side reflection members 45 is positioned in close contact with the back surface of the backrest part 40 comprising the pair of side walls 41 as shown in Fig. 6, the ventilation openings 42 and 43 are closed. Meanwhile, when the rejection member 44 comprising the pair of side wall reflection members 45 is largely apart from the back surface of the backrest part 40 comprising the pair of side walls 41, the ventilation openings 42 and 43 are opened.

In order to reflect radiant heat from a road surface in a state where the ventilation openings 42 and 43 are opened, a reflective surface is formed on inner surfaces (facing the pair of side walls 41) of the pair of side wall reflection members 45. In the state the ventilation openings are opened as shown in Fig. 7, since the pair of side wall reflection members 45 is folded on the back surface of the reflection member 44, the reflective surface formed on the inner surface of the side wall reflection member 45 faces the road surface.

According to the embodiment shown in Figs. 6 and 7, the pair of side wall reflection members 45 forms the reflective surface which reflects the radiant heat from the road surface. In addition, the reflective surface may be formed on an entire outer surfaces of the reflection member 44 and the pair of side wall reflection members 45, which do not face the backrest part 40 and the pair of side walls 41.

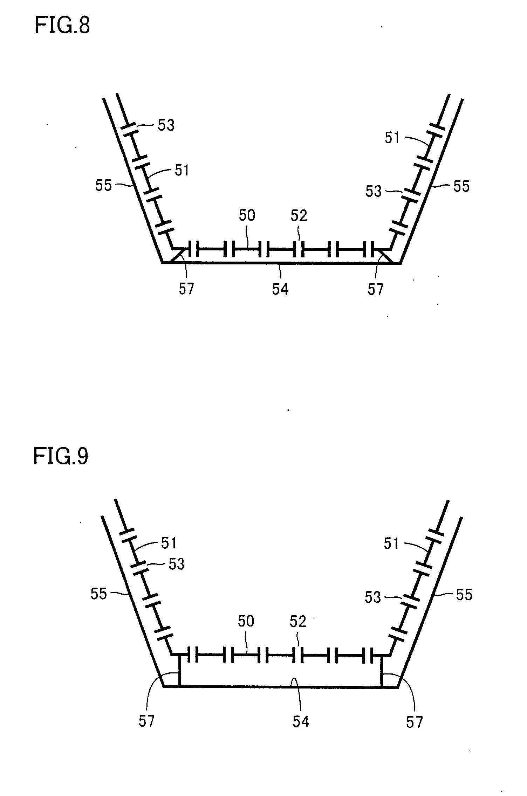

Figs. 8 and 9 schematically show still another embodiment of the present invention. An illustrated seat comprises a backrest part 50 having ventilation openings 52, and a reflection member 54 provided so as to come close to or move away from the backrest part 50 through holding means 57.

The backrest part 50 comprises a pair of side walls 51 rising from its both side edges and extending to the front. Each side wall 51 has many ventilation openings 53. As shown in Fig. 8, the reflection member 54 comprises a pair of side wall reflection members 55 extending from its both side edges along the pair of side walls 51 of the backrest part. According to the reflection member 54 and the pair of side wall reflection members 55, respective outer surfaces which do not face the backrest part 50 and the side wall 51 form a reflective surface.

When the reflection member 54 comprising the pair of side reflection members 55 is positioned in close contact with the back surface of the backrest part 50 comprising the pair of side walls 51 as shown in Fig. 8, the ventilation openings 52 and 53 are closed. Meanwhile, when the reflection member 54 comprising the pair of side wall reflection members 55 is largely apart from the back surface of the backrest part 40 comprising the pair of side walls 51, the ventilation openings 52 and 53 are opened.

As described above, although some embodiments of the present invention have been described with reference to the drawings, the present invention is not limited to the illustrated embodiments. Various kinds of modification and variations can be made to the illustrated embodiments within the same or equivalent scope of the present invention.

The present invention can be effectively used in a baby carriage having a backrest part having a function of reclining adjustment. In addition, the present invention can be effectively used as a baby carriage which can prevent heat radiation from a road surface.

## Claims

1. A baby carriage component mounted on a baby carriage (1) to be used and having a heat reflection surface (24) which faces a road surface.

2. The baby carriage component according to claim 1, comprising a goods-storage basket (20) mounted under a seat of the baby carriage, wherein at least an outer surface of a bottom wall (22) of said goods-storage basket has the heat reflection surface (24).

3. The baby carriage component according to claim 1 or 2, comprising a goods-storage basket (20) mounted under a seat of the baby carriage, wherein said goods-storage basket comprises a bottom wall (22), a front wall (21), a rear wall (23) and right and left side walls, and
each of an outer surface of said front wall (21), an outer surface of said bottom wall (22) and an outer surface of said rear wall (23) has the heat reflection surface (24).

4. The baby carriage component according to one of claims 1 to 3, comprising a seat hammock (10) mounted on a body of the baby carriage to form a seat, wherein a back surface of said seat hammock has the heat reflection surface.

5. The baby carriage component according to one of claims 1 to 4, comprising a core of a seat hammock mounted on a body of the baby carriage, wherein a back surface of said core has the heat reflection surface.

6. A baby carriage having a heat reflection sheet (3) on the back side of a seat.

7. The baby carriage according to claim 6, wherein said heat reflection sheet (3) is provided on the back side of a body frame which forms the seat.

8. A baby carriage comprising
a seat forming member having ventilation openings (33);
a reflection member (34) provided so as to be selectively changed in position between a first position in which it is positioned closely to a back surface of said seat forming member, and a second position in which it is positioned apart from the back surface of said seat forming member, and forming a reflective surface on an outer surface which does not face said seat forming member; and
holding means (35) for holding said reflection member (34) so as to be changeable in position,
wherein said ventilation openings (33) are closed when said reflection member (34) is in said first position, and said ventilation openings (33) are opened when said reflection member (34) is in said second position.

9. The baby carriage according to claim 8, wherein said seat forming member comprises a backrest part (32) which can be adjustably reclined.

10. The baby carriage according to claim 9, wherein said backrest part (40) comprises a pair of side walls (41) rising from its both side edges and extending to the front,
said each side wall has ventilation openings (43), and
said reflection member (44) comprises a pair of side wall reflection members (45) provided so as to be selectively changed in position between a position in which it comes close to a back surface of said pair of side walls (41) and a position in which it moves away from the back surface of said pair of side walls (41).

11. The baby carriage according to claim 8 or 9, wherein said seat forming member comprises a seat part.
